# EUROPEAN PATENT APPLICATION

(11) **EP 4 474 859 A1**
(43) Date of publication of application: **11.12.2024**
(21) Application number: 24174633.8
(22) Date of filing: 07.05.2024
(51) Int. Cl.: G01S 7/481, G01S 17/08, G01S 17/87

(54) **BIDIRECTIONAL LASER RANGEFINDER**

(30) Priority: 09.06.2023 CN 202321470340 U
(71) Applicant: Sndway Technology (Guangdong) Co., Ltd., Dongguan Guangdong (CN)
(72) Inventor: LI, HuaPing, Guangdong (CN); HE, Gang, Guangdong (CN)
(74) Representative: Hellmich, Wolfgang

(57) **Abstract**

A bidirectional laser rangefinder includes: a housing assembly; and a bracket assembly, a connecting plate, a first laser emitter, and a second laser emitter disposed in the housing assembly; the bracket assembly includes a first bracket and a second bracket disposed in a mirror image manner along a length direction of the bidirectional laser rangefinder; the first and second laser emitters are disposed on the first and second brackets respectively in a mirror image manner along the length direction of the bidirectional laser rangefinder; upper portions of the first and second brackets are connected to the connecting plate; and widths of the first and second brackets as well as the connecting plate are same as an internal diameter of the housing assembly for clamping. Therefore, a split type laser emitter can be coaxial and measurement precision is improved, which is simple to produce and convenient to assemble.

## Description

### TECHNICAL FIELD

The disclosure relates to the technical field of measurement devices, particularly to a bidirectional laser rangefinder.

### BACKGROUND

A laser rangefinder is an instrument that uses laser to accurately measure a distance of a target. The laser rangefinder emits a very fine laser beam towards the target during it works, a photoelectric element receives a laser beam reflected by the target, and a timer measures a time from emission to reception of the laser beam, thereby calculating the distance from an observer to the target.

An existing bidirectional laser rangefinder adopts an integrated laser or a split type laser. Therefore, in an assembly process of the existing bidirectional laser rangefinder, it is necessary to consider bidirectional laser coaxiality, which is difficult to debug and requires multiple rework, resulting in large measurement errors. Components of the existing laser rangefinder are generally positioned and assembled by screws. However, due to a small volume of the laser rangefinder, the various components of the laser rangefinder are mostly positioned by using screws with smaller specifications, which brings great inconvenience to assembly or disassembly of the instrument and is time-consuming and laborious.

### SUMMARY

In view of the above-mentioned shortcomings in the related art, the disclosure provides a bidirectional laser rangefinder, which solves the technical problems of concentric and cumbersome assembly of laser modules.

This object is achieved by the subject matter of the independent claims.

Preferred embodiments mirror the subject matter of the dependent claims.

The beneficial effects of the disclosure are that the bidirectional laser rangefinder according to the disclosure sets the first bracket and the second bracket as well as the first laser emitter and the second laser emitter to be disposed symmetrically in a mirror-arranged manner according to a central cross section along the length direction of the housing and uses the end cover firmly clamp the bracket assembly as well as the first laser emitter and the second laser emitter. Therefore, compared with the related art, the bidirectional laser rangefinder can realize coaxial operation of split type laser emitter and improve measurement precision, which is simple for production and is convenient to assemble.

### BRIEF DESCRIPTION OF THE DRAWINGS

FIG. 1 illustrates an exploded view of a bidirectional laser rangefinder according to the disclosure.
FIG. 2 illustrates a schematic structural diagram of a connecting plate.
FIG. 3 illustrates a schematic structural diagram of a housing.
FIG. 4 illustrates a schematic structural diagram of a first bracket.
FIG. 5 illustrates a front view of an end cover.
FIG. 6 illustrates a schematic structural diagram of the end cover.
FIG. 7 illustrates a schematic structural diagram after the first bracket, a second bracket, and the connecting plate are assembled.
FIG. 8 illustrates a schematic structural diagram of a front end of the first bracket.
FIG. 9 illustrates a schematic structural diagram of a cross section of an accommodating cavity.
FIG. 10 illustrates a schematic structural diagram of the bidirectional laser rangefinder with a filter protective cover covered on the accommodating cavity.

### DETAILED DESCRIPTION OF EMBODIMENTS

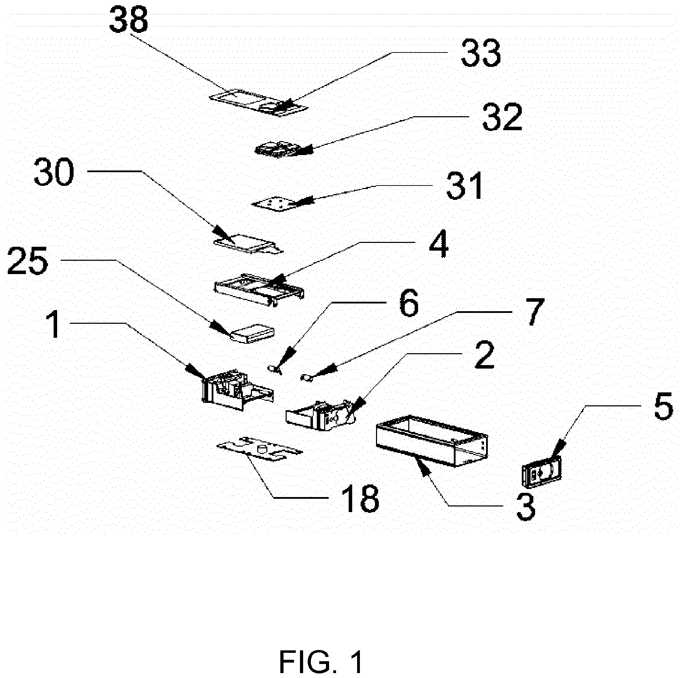

In order to better describe the disclosure, it is to be understood that the disclosure will be described in detail below with reference to attached drawings. Specially, nouns such as "upper" and "lower" mentioned herein can refer to orientations shown in FIG. 1.

### Embodiment 1

With reference to FIG. 1, FIG. 2, and FIG. 7, a bidirectional laser rangefinder includes a housing assembly; and a bracket assembly, a connecting plate 4, a first laser emitter 6, and a second laser emitter 7 disposed in the housing assembly.

The bracket assembly includes a first bracket 1 and a second bracket 2, and the first bracket 1 and the second bracket 2 are symmetrically disposed in a mirror image manner along a length direction of the bidirectional laser rangefinder. The first laser emitter 6 and the second laser emitter 7 are symmetrically disposed on the first bracket 1 and the second bracket 2 respectively in a mirror image manner along the length direction of the bidirectional laser rangefinder. The first bracket 1 and the second bracket 2 are produced by a same mold, thereby making the first bracket 1 and the second bracket 2 to be coaxial.

Upper portions of the first bracket 1 and the second bracket 2 are connected to the connecting plate 4, and widths of the first bracket 1 and the second bracket 2 and the connecting plate 4 are same, which are also same as an internal diameter of the housing assembly. Ends of the first bracket 1 and the second bracket 2 are the same as a front end and a rear end of a housing 3 and are clamped by end covers 5.

With reference to FIG. 1, FIG. 2, and FIG. 7, the first bracket 1 and the second bracket 2 are symmetrically disposed in a mirror image manner, so that the first bracket 1 and the second bracket 2 both include a sensor bracket 8, an emitter bracket 9, and a reserved bracket 10 that are integrated as a whole. Moreover, the sensor brackets 8, the emitter brackets 9, and the reserved brackets 10 of the first bracket 1 and the second bracket 2 are also symmetrically disposed in a mirror image manner. The first laser emitter 6 and the second laser emitter 7 are disposed in the corresponding emitter bracket 9 respectively, and the reserved bracket 10 is configured to fix a preset component. In an illustrated embodiment, the preset component may be a laser emitter, so that the product (i.e., the bidirectional laser rangefinder) is a bidirectional four-laser emitter, which can play a role in mutual verification. In addition, in the case that one group of laser emitters is damaged, the other groups can continue to be used. Moreover, the preset component is installed in the bidirectional laser rangefinder according to actual needs, so that the preset component is not shown in the attached drawings.

Inner sides of front ends of the first bracket 1 and the second bracket 2 define first limiting grooves 14, and the first limiting grooves 14 are matched with and clamped to the connecting plate 4.

Outer sides of the front ends of the first bracket 1 and the second bracket 2 define third limiting grooves 16, and the third limiting grooves 16 are matched with and clamped to the end covers 5.

Bottoms edges of the first bracket 1 and the second bracket 2 are used as sliding rods and the sliding rods are matched with slideways 34 disposed at the bottom of an inner side of the housing 3.

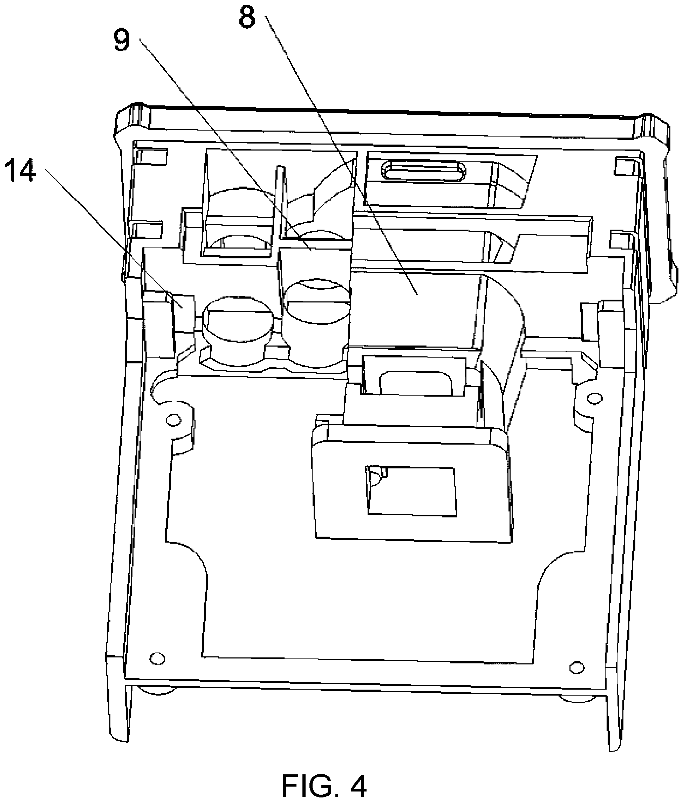

With reference to FIG. 1, FIG. 4 and FIG. 7, the sensor bracket 8 is a cavity defined with an opening, and a tail end of the sensor bracket 8 of each of the first bracket 1 and the second bracket 2 is detachably connected to a receiving plate 19; a sidewall of the tail end of the sensor bracket 8 of each of the first bracket 1 and the second bracket 2 defines a laser diode mounting hole 20, and the laser diode mounting hole is configured to install a laser diode 36; and the first laser emitter 6 and the second laser emitter 7 are disposed perpendicular to the corresponding laser diode 36 respectively.

A middle portion of the sensor bracket 8 is defined with an accommodating cavity 22, the accommodating cavity 22 is provided with a filter 21 therein, and the filter 21 is detachably connected to a bottom of the sensor bracket 8.

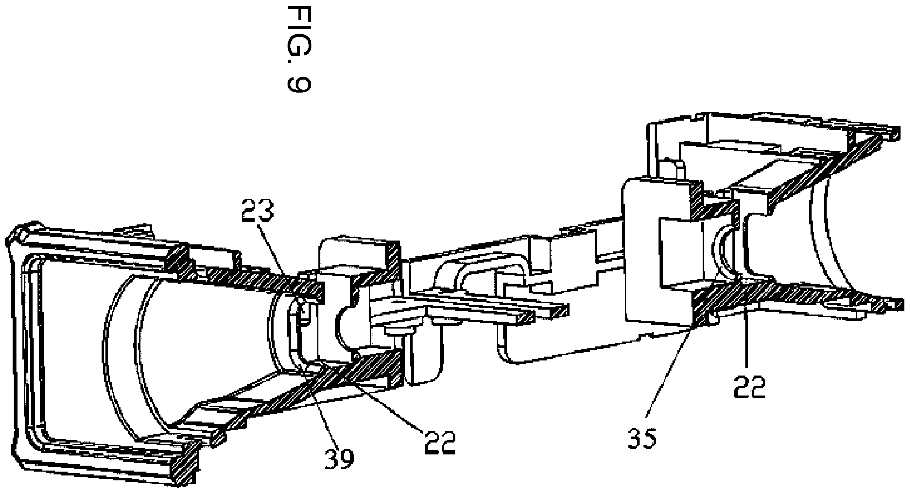

A front end and a rear end of the accommodating cavity 22 define a circular hole 35 and a rectangular hole 39 respectively. As shown in FIG. 9, the circular hole 35 and the rectangular hole 39 are disposed parallel to the filter 21, and an area of the filter 21 is larger than those of the circular hole 35 and the rectangular hole 39.

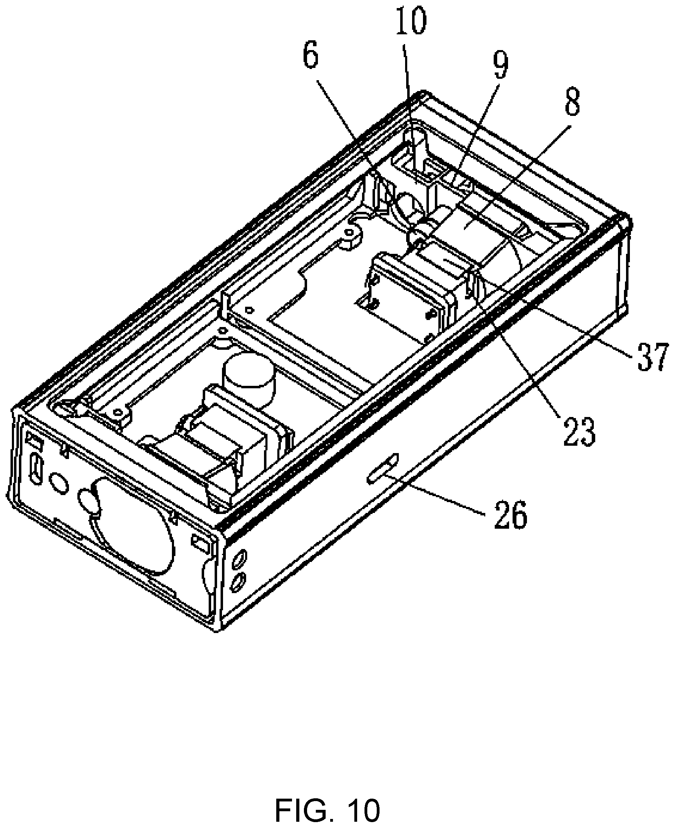

A left sidewall and a right sidewall of the accommodating cavity 22 define U-shaped grooves 23 disposed along a vertical direction respectively. As shown in FIG. 10, a top portion of the accommodating cavity 22 defines an opening, a filter protective cover 37 is disposed above the filter 21, and the filter protective cover 37 can protect the filter 21. Moreover, the filter protective cover 37 is matched with and clamped to top portions of the U-shaped grooves 23 and the top portion of the accommodating cavity 22.

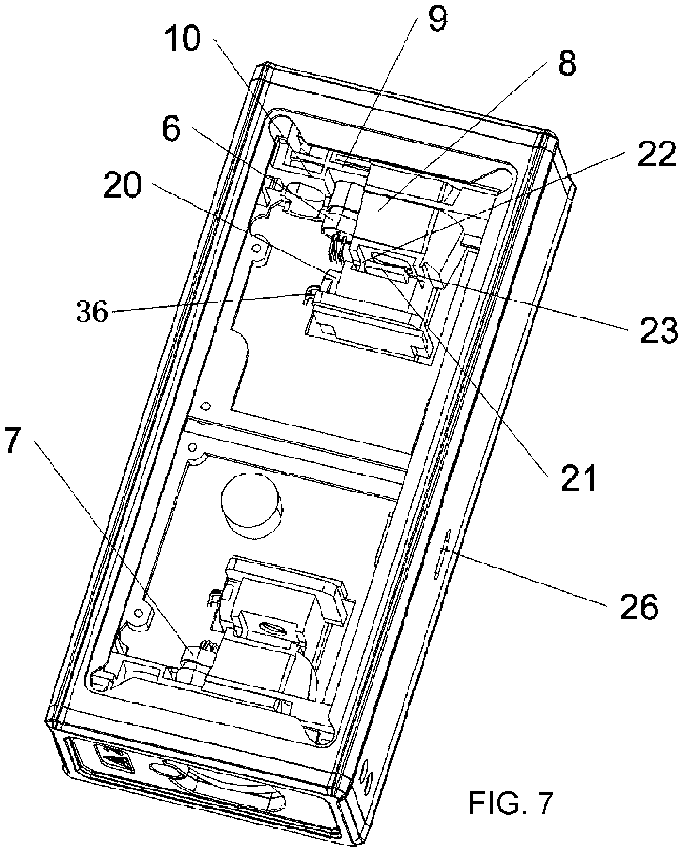

With reference to FIG. 1 and FIG. 7, the bidirectional laser rangefinder further includes a battery 25, and the battery 25 is detachably connected to tail ends of the first bracket 1 and the second bracket 2 along a width direction of the housing 3. A sidewall of the housing 3 defines a universal serial bus (USB) charging hole 26 of the battery 25 thereon.

With reference to FIG. 1 and FIG. 7, the bidirectional laser rangefinder further includes a circuit board 18, and the circuit board 18 is detachably connected to the first bracket 1 and the second bracket 2.

The circuit board 18 is I-shaped, a front end and a rear end of the circuit board 18 defines openings along the length direction of the bidirectional laser rangefinder, and the sensor brackets 8 of the first bracket 1 and the second bracket 2 are accommodated in the openings.

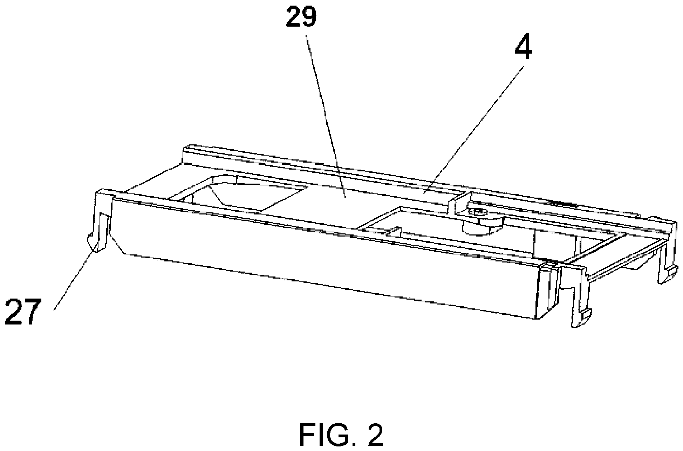

With reference to FIG. 2 and FIG. 7, the connecting plate 4 is disposed above the battery 25, four corners disposed on a front end and a rear end of the connecting plate 4 are provided with first limiting buckles 27, and the first limiting buckles 27 are matched with the first limiting grooves 14 of the first bracket 1 and the second bracket 2, thereby facilitate clamping the first bracket 1 and the second bracket 2.

With reference to FIG. 1 and FIG. 2, a middle portion of the connecting plate 4 is provided with a partition plate 29, a side of the partition plate 29 is attached with a liquid crystal display (LCD) 30, another side of the partition plate 29 is provided with a key-press panel 31 and a key 32, and a lens plate 33 is disposed above the LCD 30 and the key-press panel 31. An end of the lens plate 33 is provided with a lens 38, another end of the lens plate 33 defines an opening, a size of the lens 38 is matched with the LCD 30, and a size of the opening is matched with the key 32. The lens plate 33 is disposed on the housing 3.

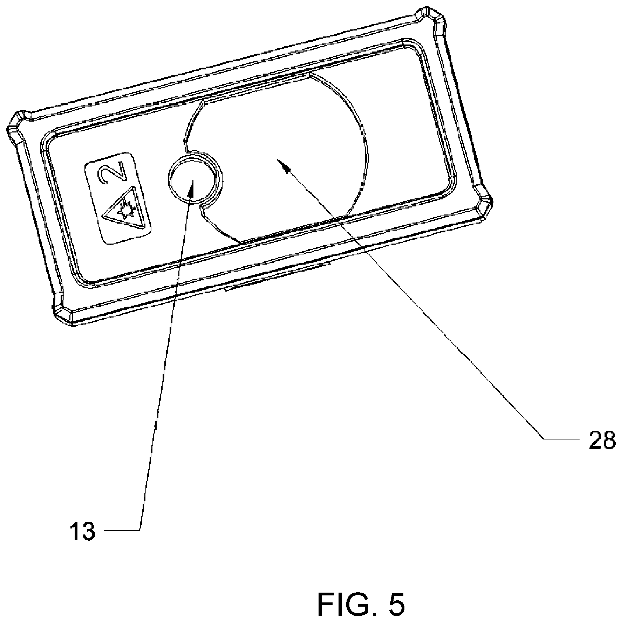

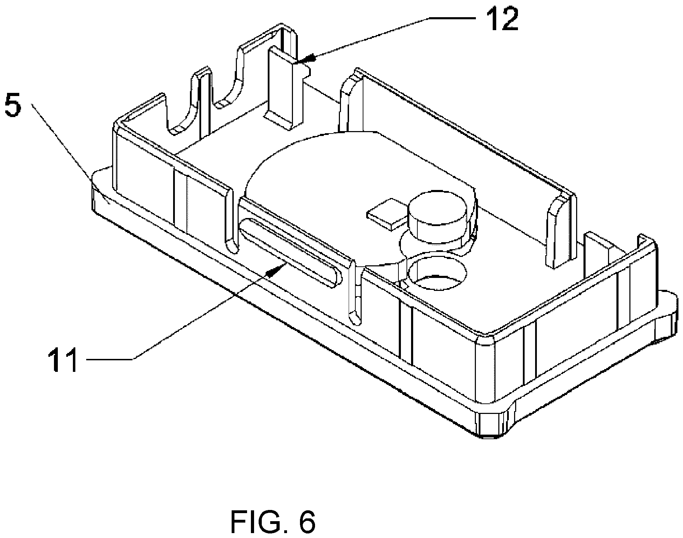

With reference to FIG. 1, FIG. 5, and FIG. 6, the bidirectional laser rangefinder further includes: the end covers 5 abutted against the front end and the rear end of the housing 3. Each of the end covers 5 defines a sensor bracket opening 28 and an emitter bracket opening 13 thereon, and the sensor bracket opening 28 and the emitter bracket opening 13 are matched with the corresponding sensor bracket 8 and the corresponding emitter bracket 9 in shape and position.

An upper end of an inner sidewall of each of the end covers 5 is provided with second limiting buckles 12, and the second limiting buckles 12 are matched with the third limiting grooves 16.

A lower end of each of the end covers 5 is provided with a limiting block 11, and the limiting block 11 is matched with a second limiting groove 15 disposed at an end portion of the housing 3. In some embodiment, the second limiting groove 15 is disposed only one end portion of the housing 3, which can also meet a function of overall positioning.

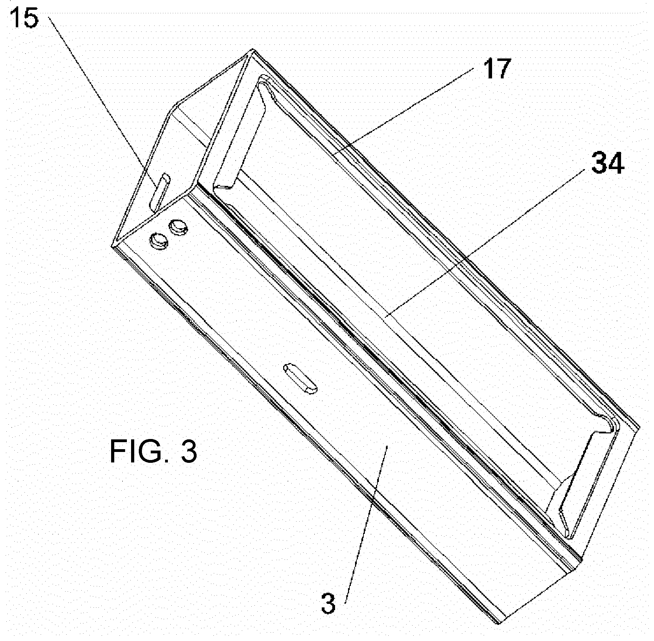

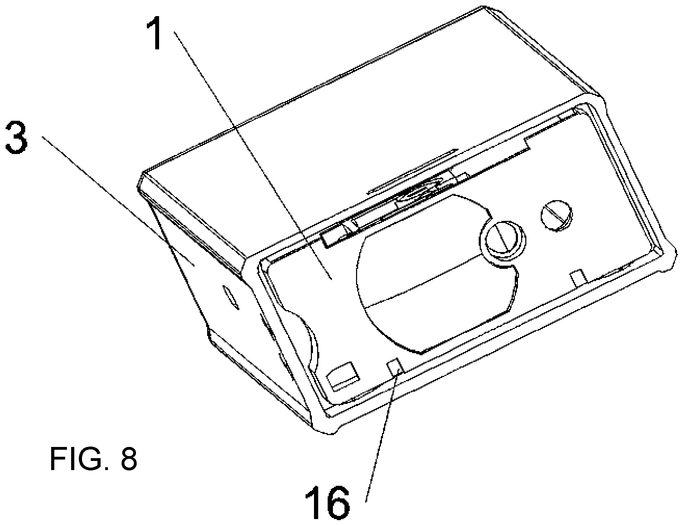

With reference to FIG. 8, FIG. 5, FIG. 3, and FIG. 1, the housing 3 defines a cavity with openings at the front end and the rear end as well as the top portion of the housing 3, and the first bracket 1, the second bracket 2, and the connecting plate 4, the battery 25, the LCD 30, as well as the key-press panel 31 are disposed in the cavity. Baffles 17 are disposed on two edges of an upper surface of the housing 3 respectively along the length direction of the housing 3 (also referred to the length direction of the bidirectional laser rangefinder), and the lens plate 33 is disposed on the baffles 17. A bottom surface of the housing 3 is provided with the second limiting grooves 15, and each of the second limiting grooves 15 is matched with the corresponding limiting block 11.

A bottom of an inner side of the housing 3 is provided with slideways 34, and the slideways 34 are matched with the sliding rods.

A magnetic material is disposed in a middle potion of the inner sidewall of the housing 3, and the magnetic material is fixed along the length direction of the housing 3, thereby assisting in measuring and absorbing on an outside iron component.

In the description of the disclosure, it should be understood that the terms "first" and "second" are used for descriptive purposes only and cannot be understood as indicating or implying relative importance or implicitly indicating the number of indicated technical features. Thus, the features defined with "first" and "second" may explicitly or implicitly include one or more of the features. In the description of the disclosure, "multiple" means two or more than two, unless otherwise specifically defined.

In the disclosure, unless otherwise specified and limited, terms such as "mounted", "connected to", "connected with", "fixed", etc., should be broadly understood. For example, the terms may refer to a fixed connection, a detachable connection, or a whole; may refer to a mechanical connection or an electrical connection; may refer to a direct connection or an indirect connection by using an intermediate medium; or may refer to a communication inside two components or an interaction relationship between two components. For those skilled in the related art, the specific meanings of the above terms in the disclosure can be understood according to specific situations.

In the disclosure, unless otherwise specified and limited, the first feature is "on" or "under" the second feature, which may be direct contact between the first feature and the second feature, or indirect contact between the first feature and the second feature through the intermediate medium. Moreover, the first feature is "above", "disposed above" and "on an upper surface of" the second feature, which may mean that the first feature is directly above or obliquely above the second feature, or merely indicates that a horizontal height of the first feature is higher than that of the second feature. The first feature is "below", "disposed below" and "on a lower surface of" the second feature, which may mean that the first feature is directly below or obliquely below the second feature, or merely indicates that the horizontal height of the first feature is lower than the second feature.

Reference throughout the disclosure to "an embodiment", "some embodiments", "the embodiment", "an example", "a specific example", or "some examples", means that a particular feature, structure, material, or characteristic described in connection with the embodiment or example is included in at least one embodiment or example of the disclosure. In the disclosure, schematic representations of the above terms do not necessarily refer to the same embodiment or example. Furthermore, the particular feature, structure, material, or characteristic may be combined in any suitable manner in any one or more embodiments or examples. In addition, those skilled in the related art may combine and associate the different embodiments or examples described in the disclosure with each other, as well as the features of different embodiments or examples, without conflicting with each other.

Although the embodiments of the disclosure have been shown and described above, it can be understood that the above embodiments are exemplary and should not be construed as a limitation to the disclosure, and those skilled in the related art may modify, amend, replace, and change the above embodiments within the scope of the disclosure.

### Reference number list

- 1: first bracket
- 2: second bracket
- 3: housing
- 4: connecting plate
- 5: end cover
- 6: first laser emitter
- 7: second laser emitter
- 8: sensor bracket
- 9: emitter bracket
- 10: reserved bracket
- 11: limiting block
- 12: second limiting buckle
- 13: emitter bracket opening
- 14: first limiting groove
- 15: second limiting groove
- 16: third limiting groove
- 17: baffle
- 18: circuit board
- 19: receiving plate
- 20: laser diode mounting hole
- 21: filter
- 22: accommodating cavity
- 23: U-shaped groove
- 25: battery
- 26: universal serial bus (USB) charging hole
- 27: first limiting buckle
- 28: sensor bracket opening
- 29: partition plate
- 30: liquid crystal display (LCD)
- 31: key-press panel
- 32: key
- 33: lens plate
- 34: slideway
- 35: circular hole
- 36: laser diode
- 37: filter protective cover
- 38: lens
- 39: rectangular hole

## Claims

1. A bidirectional laser rangefinder, comprising: a housing assembly; and a bracket assembly, a connecting plate (4), a first laser emitter (6), and a second laser emitter (7) disposed in the housing assembly;
wherein the bracket assembly comprises: a first bracket (1) and a second bracket (2) disposed in a mirror image manner along a length direction of the bidirectional laser rangefinder;
wherein the first laser emitter (6) and the second laser emitter (7) are disposed on the first bracket (1) and the second bracket (2) respectively in a mirror image manner along the length direction of the bidirectional laser rangefinder;
wherein upper portions of the first bracket (1) and the second bracket (2) are connected to the connecting plate (4); and
wherein widths of the first bracket (1), the second bracket (2), and the connecting plate (4) are same as an internal diameter of the housing assembly; and the first bracket (1), the second bracket (2), and the connecting plate (4) are clamped to the housing assembly.

2. The bidirectional laser rangefinder as claimed in claim 1, wherein each of the first bracket (1) and the second bracket (2) comprises: a sensor bracket (8), an emitter bracket (9), and a reserved bracket (10) integrated as a whole; and each of the first laser emitter (6) and the second laser emitter (7) is disposed in the corresponding emitter bracket (9), and the reserved bracket (10) is configured to fix a preset component.

3. The bidirectional laser rangefinder as claimed in claim 2, wherein inner sides of front ends of the first bracket (1) and the second bracket (2) define first limiting grooves (14), and the first limiting grooves (14) are matched with the connecting plate (4) in a limiting manner; and
wherein outer sides of the front ends of the first bracket (1) and the second bracket (2) define third limiting grooves (16), and the third limiting grooves (16) are matched with the housing assembly in a limiting manner.

4. The bidirectional laser rangefinder as claimed in claim 3, wherein the sensor bracket (8) of each of the first bracket (1) and the second bracket (2) is a cavity defined with an opening, and a tail end of the sensor bracket (8) of each of the first bracket (1) and the second bracket (2) is detachably connected to a receiving plate (19); a sidewall of the tail end of the sensor bracket (8) of each of the first bracket (1) and the second bracket (2) defines a laser diode mounting hole (20), and the laser diode mounting hole (20) is configured to install a laser diode (36); and each of the first laser emitter (6) and the second laser emitter (7) is disposed perpendicular to the corresponding laser diode (36);
wherein a middle portion of the sensor bracket (8) of each of the first bracket (1) and the second bracket (2) defines an accommodating cavity (22), the accommodating cavity (22) is provided with a filter (21) therein, and the filter (21) is detachably connected to a bottom of the corresponding sensor bracket (8);
wherein a front end and a rear end of the accommodating cavity (22) defines a circular hole (35) and a rectangular hole (39) respectively; the circular hole (35) and the rectangular hole (39) are disposed parallel to the filter (21); and an area of the filter (21) is larger than areas of the circular hole (35) and the rectangular hole (39); and
wherein a left sidewall and a right sidewall of the accommodating cavity (22) define U-shaped grooves (23) disposed along a vertical direction respectively, a top portion of the accommodating cavity (22) defines an opening, a filter protective cover (37) is disposed above the filter (21), and the filter protective cover (37) is matched with top portions of the U-shaped grooves (23) and the top portion of the corresponding accommodating cavity (22) to protect the filter (21).

5. The bidirectional laser rangefinder as claimed in claim 4, further comprising: a battery (25); and
wherein the battery (25) is detachably connected to tail ends of the first bracket (1) and the second bracket (2) along a width direction of a housing (3); and a sidewall of the housing (3) defines a universal serial bus (USB) charging hole (26) of the battery (25) thereon.

6. The bidirectional laser rangefinder as claimed in claim 5, wherein the connecting plate (4) is disposed above the battery (25), four corners disposed on a front end and a rear end of the connecting plate (4) are provided with first limiting buckles (27), and the first limiting buckles (27) are matched with the first limiting grooves (14).

7. The bidirectional laser rangefinder as claimed in claim 6, wherein a middle portion of the connecting plate (4) is provided with a partition plate (29), a side of the partition plate (29) is attached with a liquid crystal display (LCD) (30), another side of the partition plate (29) is provided with a key-press panel (31) and a key (32), and a lens plate (33) is disposed above the LCD (30) and the key-press panel (31); and
wherein an end of the lens plate (33) is provided with a lens (38), another end of the lens plate (33) defines an opening, a size of the lens (38) is matched with the LCD (30), and a size of the opening is matched with the key (32); and the lens plate (33) is disposed on the housing (3).

8. The bidirectional laser rangefinder as claimed in claim 7, wherein the housing assembly comprises: the housing (3) and end covers (5), a front end and a rear end of the housing (3) are abutted against the end covers (5) respectively; each of the end covers (5) defines a sensor bracket opening (28) and an emitter bracket opening (13) thereon, and the sensor bracket opening (28) and the emitter bracket opening (13) are matched with the corresponding sensor bracket (8) and the corresponding emitter bracket (9) respectively;
wherein an upper end of an inner sidewall of each of the end covers (5) is provided with second limiting buckles (12), and the second limiting buckles (12) are matched with the third limiting grooves (16); and
wherein a lower end of each of the end covers (5) is provided with a limiting block (11), and the limiting block (11) is matched with an end portion of the housing (3).

9. The bidirectional laser rangefinder as claimed in claim 8, wherein the housing (3) defines a cavity with openings at the front end, the rear end, and a top portion of the housing (3); and the first bracket (1), the second bracket (2), and the connecting plate (4) are disposed in the cavity; baffles (17) are disposed on two edges of an upper surface of the housing (3) respectively along a length direction of the housing (3), and the lens plate (33) is disposed on the baffles (17); and a bottom surface of the housing is provided with second limiting grooves (15), and each of the second limiting grooves (15) is matched with the corresponding limiting block (11).

10. The bidirectional laser rangefinder as claimed in claim 9, wherein a bottom of an inner side of the housing (3) is provided with slideways (34), and the slideways (34) are matched with bottom edges of the first bracket (1) and the second bracket (2).

11. The bidirectional laser rangefinder as claimed in one of the claims 2 to 10, wherein the bidirectional laser rangefinder further comprises: a circuit board (18), and the circuit board (18) is detachably connected to the first bracket (1) and the second bracket (2); and two ends of the circuit board (18) define grooves, and each of the grooves accommodates the corresponding sensor bracket (8).

12. A bidirectional laser rangefinder, comprising: a housing (3), end covers (5), a connecting plate (4), a first bracket (1), a second bracket (2), a first laser emitter (6), and a second laser emitter (7);
wherein the first bracket (1), the second bracket (2), the first laser emitter (6), and the second laser emitter (7) are disposed in the housing (3); and the connecting plate (4) is connected to upper portions of the first bracket (1) and the second bracket (2);
wherein the first bracket (1) and the second bracket (2) are symmetrically disposed along a length direction of the housing (3); and the first laser emitter (6) and the second laser emitter (7) are symmetrically disposed on the first bracket (1) and the second bracket (2), respectively, along the length direction of the housing (3); and
wherein the end covers (5) are clamped to a front end and a rear end of the housing (3).

13. The bidirectional laser rangefinder as claimed in claim 12, wherein widths of the first bracket (1) and the second bracket (2) are the same as an internal diameter of the housing (3).

14. The bidirectional laser rangefinder as claimed in claim 12 or 13, wherein the connecting plate (4) is provided with first limiting buckles (27) on four corners of the connecting plate (4); an inner sidewall of the first bracket (1) and an inner sidewall of the second bracket (2) both are provided with first limiting grooves (14); and the connecting plate (4) is connected to the first bracket (1) and the second bracket (2) through clamping the first limiting buckles (27) to the first limiting grooves (14).

15. The bidirectional laser rangefinder as claimed in claim 14, wherein an outer sidewall of the first bracket (1) and an outer sidewall of the second bracket (2) both are provided with third limiting grooves (16); an upper end of an inner sidewall of each of the end covers (5) is provided with second limiting buckles (12); and the end covers (5) are abutted against the first bracket (1) and the second bracket (2) through clamping the second limiting buckles (12) on the third limiting grooves (16).
